(19) Europäisches Patentamt
European Patent Office
Office européen des brevets

(11) Veröffentlichungsnummer : **0 345 467 B1**

(12) **EUROPÄISCHE PATENTSCHRIFT**

(45) Veröffentlichungstag der Patentschrift :
04.12.91 Patentblatt 91/49

(51) Int. Cl.⁵ : **B01J 8/24, C10B 53/00,**
**F23D 14/72, F23G 5/30**

(21) Anmeldenummer : 89108033.5

(22) Anmeldetag : 03.05.89

(54) **Wirbelbettreaktor.**

(30) Priorität : 10.05.88 DE 3815989

(43) Veröffentlichungstag der Anmeldung :
13.12.89 Patentblatt 89/50

(45) Bekanntmachung des Hinweises auf die
Patenterteilung :
04.12.91 Patentblatt 91/49

(84) Benannte Vertragsstaaten :
AT BE CH DE GB IT LI NL SE

(56) Entgegenhaltungen :
DE-A- 3 437 103
DE-A- 3 523 653
CHEM.-ING.-TECH., Band 55, Nr. 1, 1983, Seiten 56-57, Verlag Chemie GmbH, Weinheim,
DE; W. KAMINSKY et al.: "Pyrolyse von
Ölsand und Ölschiefer in der Wirbelschicht"

(73) Patentinhaber : **Asea Brown Boveri**
**Aktiengesellschaft**
**Kallstadter Strasse 1**
**W-6800 Mannheim 31 (DE)**

(72) Erfinder : **Steinstrasser, Frank, Dr.**
**Rebenstrasse 17**
**W-6148 Heppenheim (DE)**
Erfinder : **Förster Walter**
**Lettenweg 66a**
**W-6943 Birkenau (DE)**

(74) Vertreter : **Rupprecht, Klaus, Dipl.-Ing. et al**
**c/o Asea Brown Boveri Aktiengesellschaft**
**Zentralbereich Patente Postfach 100351**
**W-6800 Mannheim 1 (DE)**

EP 0 345 467 B1

## Beschreibung

Die Erfindung betrifft einen Wirbelbettreaktor für die pyrolytische Behandlung von Ausgangsmaterial, insbesondere Kohlenwasserstoffe enthaltendem Abfallmaterial, mit mindestens einem in den Pyrolyseraum ragenden Mantelstrahlheizrohr, dessen Flammrohr von einem Rauchgas-Rückströmkanal umgeben ist.

In einem bekannten Wirbelbettreaktor dieser Art sind Mantelstrahlheizrohre angeordnet, die durch Gas beheizt werden und zur Erhitzung des Wirbelbettes dienen (Chem.-Ing.-Tech. 55 (1983) Nr.1, S. 56-57, Synopse 1059). Da die Gefahr besteht, daß die insbesondere mit dem Abfallmaterial und den Pyrolysezuschlagstoffen in Berührung stehenden Heizmäntel der Mantelstrahlheizrohre während des Betriebs sehr rasch verschmutzen mit der Folge einer Überhitzung und Beschädigung, ist eine Temperaturüberwachung erforderlich. Eine Überhitzung kann auch durch Betriebsstörungen ausgelöst sein. Hierbei ist eine möglichst rasche Erfassung von Temperaturänderungen, insbesondere Temperaturerhöhungen des Mantelstrahlheizrohres wünschenswert, damit erforderlichenfalls Gegenmaßnahmen wie Leistungsminderung oder Abschaltung des betroffenen Mantelstrahlheizrohres in die Wege geleitet werden können.

Der Erfindung liegt daher die Aufgabe zugrunde, einen Wirbelbettreaktor der eingangs genannten Art anzugeben, dessen Betriebssicherheit durch eine rasch ansprechende Temperaturüberwachung des Mantelstrahlheizrohres gesteigert ist. Darüber hinaus sollen die hierzu erforderlichen Maßnahmen einfach und daher kostengünstig durchzuführen sein.

Die Lösung dieser Aufgabe besteht bei einem Wirbelbettreaktor der eingangs genannten Art erfindungsgemäß darin, daß mindestens ein Thermoelement an seinem meßaktiven Ende in einem im Verhältnis zum Flammrohrdurchmesser kleinen Metallkörper angeordnet ist, der im heißen Endbereich des Flammrohres auf dessen Außenseite wärmeleitend befestigt ist und in den Rückströmkanal ragt.

Der meßaktive Teil des Thermoelementes ist also in einem kleinen Metallkörper angeordnet, der im heißesten Bereich des Flammrohres auf diesem befestigt ist und in den Rückströmkanal ragt. Das Thermoelement erfaßt daher nicht nur Temperaturänderungen, insbesondere Temperaturerhöhungen, des thermisch sehr hoch belasteten Flammrohres, sondern auch Temperaturänderungen der im Rückströmkanal strömenden Rauchgase. Da bei einer Verschmutzung des Heizmantels, der unter Bildung des Rückströmkanals das Flammrohr umgibt, seine Wärmeabgabe an das Wirbelbett vermindert ist, führt dies zu einer Temperatursteigerung des Heizmantels und somit zu Temperaturerhöhungen der Rauchgase und des Flammrohres. Diese beiden Temperaturerhöhungen werden durch die erfindungsgemäße Anordnung des Thermoelements sehr rasch erfaßt, so daß Gegenmaßnahmen vor einer Beschädigung des Mantelstrahlheizrohres ergriffen werden können.

Vorteilhaft ist es, mehrere Thermoelemente im heißesten Bereich des Flammrohres insbesondere am Umfang verteilt anzuordnen, damit Temperatursteigerungen großflächig erfaßt werden.

Eine vorteilhafte Weiterbildung der Erfindung besteht nun darin, daß zwischen den Metallkörper und das Flammrohr ein metallisches Zwischenstück eingefügt ist, das an die Profile von Flammrohr und Metallkörper angepaßt ist. Hierdurch wird die Befestigung des Metallkörpers am Flammrohr erleichtert und je nach Dicke des Zwischenstücks die Möglichkeit geschaffen, den Metallkörper mehr oder weniger weit in den Rückströmkanal ragen und somit mehr oder weniger vom Rauchgas beaufschlagen zu lassen, so daß dessen Temperatur mehr oder weniger die Temperaturmessung beeinflußt. Hierdurch läßt sich eine Gewichtung des Einflusses der beiden den Metallkörper beeinflussenden Temperaturen, nämlich Flammrohr- und Rauchgastemperatur, erzielen.

Um raschen Temperaturänderungen folgen zu können, ist es zweckmäßig, daß der Metallkörper eine Masse aufweist, die gering ist im Verhältnis zu seiner Oberfläche. Weist nun auch das Zwischenstück eine Masse auf, die gering ist im Verhältnis zu den Berührungsflächen zwischen Zwischenstück und Flammrohr sowie zwischen Zwischenstück und Metallkörper, so kann das Zwischenstück Temperaturänderungen des Flammrohres sehr rasch folgen und an den Metallkörper weiterleiten.

Zweckmäßig weist der Metallkörper ungefähr die Form eines Quaders auf, dessen Längsachse ungefähr in Richtung der Flammrohrlängsachse verläuft, wobei das meßaktive Ende des Thermoelements in einem Längskanal des Metallkörpers angeordnet ist.

Eine andere, bevorzugte Weiterbildung der Erfindung besteht darin, daß der Längskanal an dem Ende, das dem Kopf des Mantelstrahlheizrohres abgewandt ist, durch einen Boden verschlossen ist, und daß die Verbindungsstelle der Thermodrähte des Thermoelementes in eine Längsbohrung des Bodens eingeschweißt ist. Hierdurch ist die meßaktive Verbindungsstelle der Thermodrähte gegen Angriffe durch die Atmosphäre der Rauchgase geschützt und gleichzeitig ein guter Kontakt zwischen Metallkörper und Verbindungsstelle gewährleistet.

Damit temperaturbedingte Längenänderungen des Mantelstrahlheizrohres das Thermoelement nicht beeinflussen, empfiehlt es sich, daß das Thermoelement vom Metallkörper zum kalten Ende des Flammrohres mäander- oder wellenförmig auf dem Flammrohr geführt ist und am Kopf des Mantelstrahlheizrohres an einer

2

Dichtstelle in den Außenraum übertritt.

Weitere Vorteile und Merkmale der Erfindung gehen aus der folgenden Beschreibung eines Ausführungsbeispieles im Zusammenhang mit der schematischen Zeichnung hervor.

Hierbei zeigt :

Fig. 1      einen vertikalen Zentralschnitt durch einen Wirbelbettreaktor gemäß der Erfindung,

Fig. 2      Fig. 2 ein Mantelstrahlheizrohr des Wirbelbettreaktors als Einzelheit in zentralem Vertikalschnitt sowie in liegender, vergrößerter Darstellung,

Fig. 3      die Einzelheit III der Fig. 2 in größerer Darstellung,

Fig. 4      einen Schnitt durch den Gegenstand der Fig. 3 entsprechend der Schnittlinie IV-IV, wobei hinter der Schnittebene liegende Teile nicht dargestellt sind,

Fig. 5      den Bereich V der Fig. 3 in vergrößertem Vertikalschnitt und

Fig. 6      einen Ausschnitt des Flammrohres samt Metallkörper in einer Ansicht aus Richtung VI der Fig. 2 in vergrößerter Darstellung.

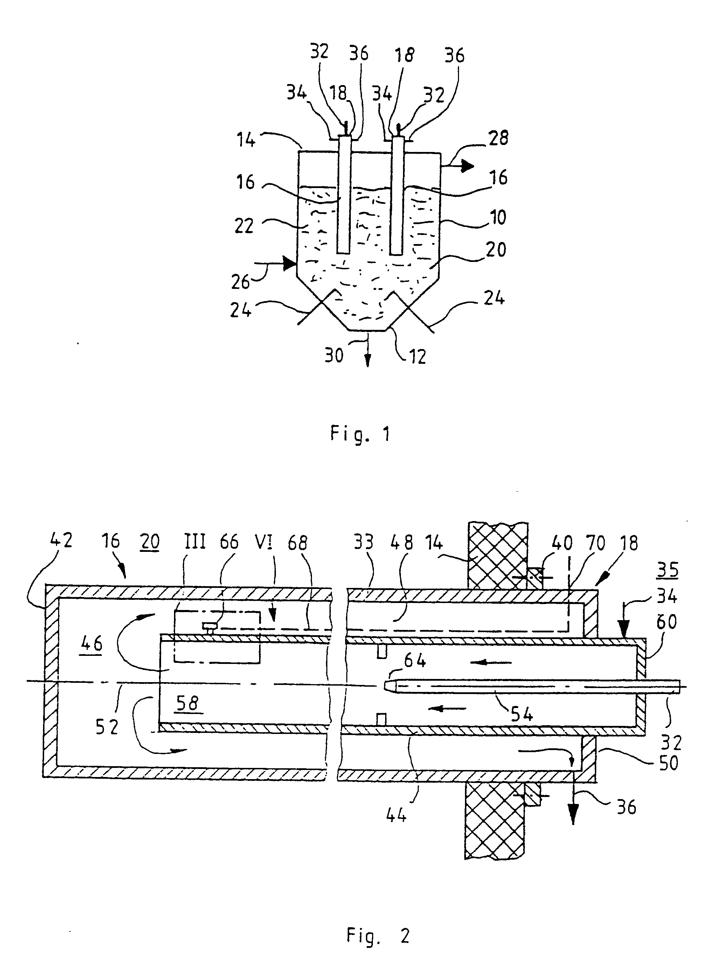

Der in Fig. 1 dargestellte stehende Wirbelbettreaktor weist ein zylindrisches Oberteil 10 auf, an das sich ein nach unten verjüngendes Unterteil 12 anschließt. Das Oberteil ist an seinem oberen Ende durch eine Decke 14 verschlossen, an der mehrere gerade Mantelstrahlheizrohre 16 vertikal befestigt sind derart, daß die Köpfe 18 der Mantelstrahlheizrohre außerhalb des Pyrolysereaktors sind, die wärmeabgebenden Bereiche dagegen in den Pyrolyseraum 20 ragen. Die Mantelstrahlheizrohre erstrecken sich hierbei ungefähr bis zum Übergang des Oberteils 10 in das Unterteil 12. Die Mantelstrahlheizrohre sind hierbei über den Querschnitt des Pyrolyseraums 20 gleichmäßig verteilt angeordnet und tauchen in das im Pyrolyseraum 20 ausgebildete Wirbelbett 22 ein.

Während des Betriebes wird in das im Pyrolyseraum 20 vorhandene Wirbelmaterial, das vorzugsweise aus feinkörnigem Sand besteht, ein Wirbelgas durch die Wirbelgasleitungen 24 in den Pyrolyseraum eingeleitet, so daß der Sand aufgewirbelt wird und das Wirbelbett 22 entsteht. Das für die thermische Zersetzung vorgesehene Abfallmaterial wird durch eine geeignete und durch einen Pfeil 26 angedeutete Fördereinrichtung in den unteren Bereich des Wirbelbettes 22 eingebracht. Das bei der thermischen Zersetzung entstehende Pyrolysegas wird am oberen Endbereich des Pyrolyseraums durch eine Rohrleitung 28 abgezogen und weiterverarbeitet, der Pyrolyserückstand wird am unteren Ende des Pyrolyseraums durch einen Austragstutzen 30 entfernt.

Weitere Ausführungen über Wirbelbettreaktoren dieser Art sind in der DE-OS 3523653 enthalten.

Zur Beheizung des Wirbelbettes auf die erforderliche Betriebstemperatur von ungefähr 400 bis 900° Celsius werden die Mantelstrahlheizrohre 16 durch Gas beheizt. Hierzu wird an den Köpfen 18 der Mantelstrahlheizrohre ein Heizgas durch die Stutzen 32 zugeführt, die erforderliche Verbrennungsluft wird durch die Stutzen 34 eingeleitet, wogegen die Abgase durch die Stutzen 36 abziehen. Mantelstrahlheizrohre dieser Art sind z.B. durch die DE-AS 1811155 bekanntgeworden. Sie zeichnen sich durch hohe Heizleistung aus und dienen im vorliegenden Fall zur indirekten Beheizung des Wirbelbettes 22.

Fig. 2 zeigt ein Mantelstrahlheizrohr 16 als Einzelheit im zentralen Vertikalschnitt in gegenüber Fig. 1 vergrößerter, liegender Darstellung. Das Mantelstrahlheizrohr 16 weist einen äußeren geraden ringzylindrischen metallischen Heizmantel 33 auf, der an seinem einen Ende die Decke 14 des Wirbelbettreaktors durchdringt, im Außenraum 35 endet und dort Bestandteil ist des Mantelstrahlheizrohr-Kopfes 18. Hierbei ist der Heizmantel 33 durch einen Ringflansch 40 gasdicht an der Außenseite der Decke 14 festgelegt. Der Heizmantel 33 ragt größtenteils in den Pyrolyseraum 20 und ist an seinem in der Zeichnung linken Ende durch eine geeignete metallische Platte 42 gasdicht verschlossen. Innerhalb des Heizmantels ist das gerade, ringzylindrische Flammrohr 44 koaxial angeordnet und endet mit seinem heißen, in der Zeichnung linken Ende mit Abstand vor der Platte 42 unter Bildung einer Wendekammer 46 für die Rauchgase. Der äußere Durchmesser des metallischen Flammrohres ist so gewählt, daß zwischen dem Flammrohr 44 und dem Heizmantel 33 ein ringzylindrischer Rauchgas-Rückströmkanal 48 von geeignetem Querschnitt entsteht. Das in der Zeichnung rechte Ende des Flammrohres 44 überragt den Heizmantel 33, der Ringspalt zwischen Heizmantelende und Flammrohr 44 ist durch eine Kreisringscheibe 50 gasdicht verschlossen.

In der Flammrohrlängsachse 52 verläuft ein Düsenstock 54, der mit Abstand vor dem heißen und in der Zeichnung linken Endbereich 58 des Flammrohres endet. Der Düsenstock ist an dem in der Zeichnung rechten Ende des Flammrohres durch dessen Verschlußplatte 60 in den Außenraum geführt und bildet dort den Stutzen 32, durch den das Brenngas einer am linken Ende des Düsenstockes angeordneten Brennerdüse 64 zugeführt wird.

Im Bereich des Mantelstrahlheizrohr-Kopfes 18 ist am Flammrohr 44 der angedeutete Stutzen 34 für die Zufuhr der Verbrennungsluft radial angeordnet. Die Abfuhr der Abgase erfolgt ebenfalls am Mantelstrahlheiz-

3

rohr-Kopf durch den radialen Stutzen 36, der am Heizmantel 33 angeordnet ist.

Im heißen Endbereich ist auf der Außenseite des Flammrohres 44 der Metallkörper 66 angeordnet, in dem das meßaktive Ende des Thermoelementes 68 vorgesehen ist, wobei in Fig. 2 das Thermoelement 68 durch eine gestrichelte Linie angedeutet ist. Das Thermoelement verläuft entlang der Außenseite des Flammrohres 44 zum Kopf 18 des Mantelstrahlheizrohres und ist dort gasdicht in radialer Richtung in den Außenraum 35 geführt. Der Abstand des Metallkörpers 66 vom in der Zeichnung linken Ende des Flammrohres beträgt ungefähr das 0,5- bis 2-fache des Flammrohrdurchmessers.

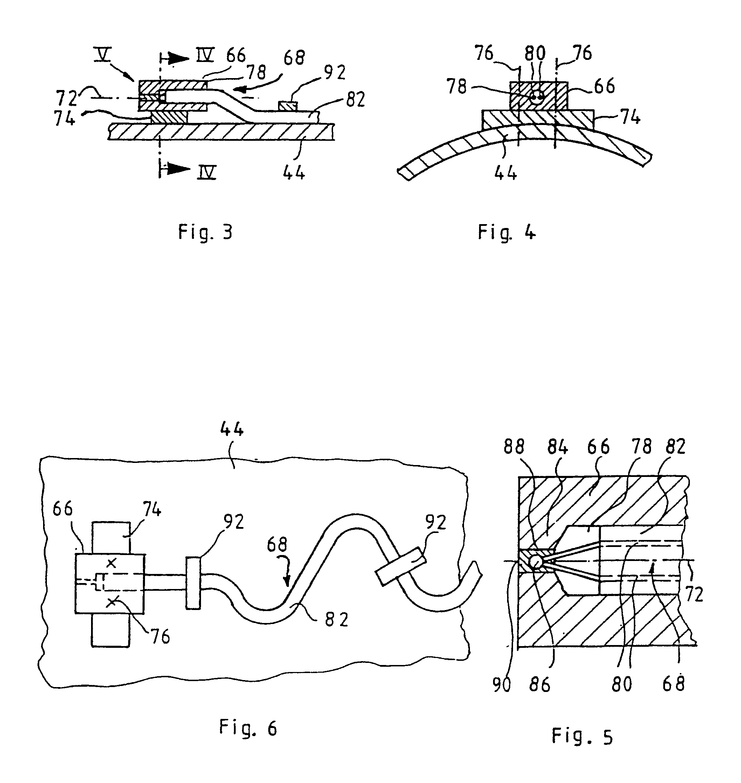

In den Figuren 3 bis 5 ist der Aufbau und die Anordnung des Metallkörpers 66 näher dargestellt. Wie zu erkennen ist, besitzt der Metallkörper 66 etwa die Form eines Quaders, dessen Längsachse ungefähr in Richtung der Flammrohrlängsachse 52 verläuft. Die Länge des Metallkörpers ist ungefähr gleich dem 5- bis 10-fachen der Wanddicke des Flammrohres 44, die Breite und Dicke des Metallkörpers ist ungefähr gleich dem 1,5- bis 4-fachen der Wandstärke des Flammrohres 44. Zwischen dem Metallkörper 66 und dem Flammrohr 44 ist ein metallisches Zwischenstück 74 eingefügt. Die Dicke des Zwischenstückes in Richtung der Flammrohrlängsachse 52 ist geringer als die Länge des Metallkörpers 66, die Haupterstreckung des Zwischenstückes 74 ist bezüglich des Flammrohres 44 in tangentialer Richtung. Das Zwischenstück 74 weist hierbei eine derartige Aussparung auf, daß es sich satt an die Außenwand des Flammrohrs 44 anlegt und andererseits guten Kontakt zum Metallkörper 66 aufweist, wie insbesondere aus den Figuren 3 und 4 ohne weitere Erläuterungen klar zu ersehen ist.

Die tangentiale Länge des Zwischenstückes 74 beträgt ungefähr das 1,5- bis 3-fache der Breite des Metallkörpers 66 in tangentialer Richtung. Die Befestigung des Metallkörpers 66 samt Zwischenstückes 74 am Flammrohr 44 erfolgt zweckmäßig durch in Fig. 4 angedeutete Schrauben 76 oder vorteilhafter durch gegenseitige Verschweißung.

Wie aus den Figuren 3 bis 5 zu erkennen ist, besitzt der Metallkörper 66 einen ungefähr in seinem Zentrum in Richtung der Flammrohrlängsachse 52 verlaufenden Längskanal 78, vorzugsweise in Form einer Bohrung, die vom kopfseitigen Ende des Mantelstrahlheizrohres her in den Metallkörper 66 eingearbeitet ist.

Im Längskanal 78 endet das Thermoelement 68, das zwei Thermodrähte 80 aufweist, die in einer runden, feuerfesten elektrischen Isolierung 82 angeordnet sind. Die lichte Weite des Längskanals 78 und das Profil der Isolierung 82 sind hierbei derart aufeinander abgestimmt, daß das Thermoelement 68 gasdicht im Längskanal 78 endet. Das Thermoelement besteht im vorliegenden Fall zweckmäßig aus dem Thermopaar NiCr-Ni oder PtRh-Pt, die Dicke der Thermodrähte beträgt ungefähr 0,5 bis 1mm.

In Fig. 5 ist der in der Zeichnung linke Endbereich des Metallkörpers 66 vergrößert dargestellt. Man erkennt das Thermoelement 68, dessen Isolierung mit geringem Abstand vor dem Boden 84 des Metallkörpers 66 endet. Die Thermodrähte 80 sind in axialer Richtung aus der Isolierung 82 herausgeführt und durch eine Schweißperle 86 miteinander verbunden, wobei die Schweißperle 86 den eigentlichen Temperaturaufnehmer bildet.

Die Schweißperle 86 ist in einer zum Längskanal 78 ungefähr koaxialen Längsbohrung 88 des Bodens 84 eingebracht, wobei die Längsbohrung 88 den Boden 84 durchdringt. Die lichte Weite der Längsbohrung 88 ist so gewählt, daß sie die Schweißperle 86 gerade aufnehmen kann. Im allgemeinen beträgt ihre lichte Weite ungefähr das 0,3- bis 0,5-fache der lichten Weite des Längskanals 78. In axialer Richtung befindet sich die Schweißperle 86 im mittleren Bereich des Bodens 84. Zur Festlegung und zur gut wärmeleitenden Verbindung der Schweißperle mit dem Boden 84 des Metallkörpers ist der restliche linke Teil der Längsbohrung 88 durch Verschweißung mit Schweißmaterial 90 vorzugsweise gasdicht ausgefüllt, wie dies deutlich aus Fig. 5 zu ersehen ist.

Aus Fig. 6 ist die Verlegung des Thermoelements 68 auf der Außenseite des Flammrohres 44 dargestellt. Man erkennt, daß das Thermoelement 68 in Wellen- oder Mäanderform vom Metallkörper 66 zum Kopf 18 des Mantelstrahlheizrohres geführt ist. Die Wellenlänge beträgt 10 bis 30 cm, die Amplitude 3 bis 8 cm. Hierbei ist das Thermoelement 68 mit gleichmäßig verteilt angeordneten und in geeigneter Weise am Flammrohr 44 befestigten Schellen 92 auf der Außenseite des Flammrohres 44 festgelegt. Am Kopf 18 ist das Thermoelement an der Dichtstelle 70 durch den Heizmantel 33 radial nach außen zu einer Temperaturvergleichsstelle und zu geeigneten Temperaturanzeige- und/oder Überwachungsgeräten geführt. Die Überwachungsgeräte beeinflussen die Heizleistung der Mantelstrahlheizrohre durch Verändern der Brenngaszufuhr. Dies ist in den Figuren nicht dargestellt. Die Durchtrittstelle des Thermoelements durch den Heizmantel 33 ist in geeigneter Weise, insbesondere durch eine Stopfbüchse, abgedichtet.

Während des Betriebs strömt Brenngas durch den Düsenstock 32 zur Düse 64 und tritt dort in das Flammrohr 44 aus. Hier verbrennt das Brenngas mit Hilfe der durch den Stutzen 34 in das Flammrohr eingeführten Verbrennungsluft. Die hierbei entstehenden Rauchgase treten in die Wendekammer 46 ein, werden hier umgelenkt und strömen durch den Rückströmkanal 48 zum Stutzen 36, der die Rauchgase abführt.

Der Heizmantel 33, der für die Erwärmung des Wirbelbettes 20 auf 400 bis 1000°C vorgesehen ist, wird durch die in der Wendekammer 46 und im Rückströmkanal 48 fließenden Rauchgase erhitzt. Da im Flammrohr 44 die Verbrennung des Brenngases stattfindet, wird das Flammrohr sehr stark erhitzt, insbesondere in jenem Bereich, der der Wendekammer 46 benachbart ist. Dieser Bereich ist daher als heißer Endbereich 58 bezeichnet worden. Infolge der hohen Temperatur des Flammrohres 44 gibt dieses Wärme durch Strahlung an den Heizmantel 33 ab, der Heizmantel ist demnach durch Konvektionswärme, die von den Rauchgasen abgegeben wird, sowie durch Strahlungswärme des Flammrohres 44 beheizt.

Da der Metallkörper 66 in den Rückströmkanal 48 ragt, wird er zum einen durch die dort strömenden Rauchgase beheizt. Eine weitere Beheizung erfolgt vom Flammrohr 44 her, und zwar einmal durch Wärmestrahlung des Flammrohres sowie hauptsächlich durch Wärmeleitung über das Zwischenstück 74. Die vom Thermoelement an der Schweißperle 86 erfaßte Temperatur wird daher von der Rauchgastemperatur im Rückströmkanal 48 und von der Temperatur des Flammrohres 44 bestimmt. Änderungen, insbesondere Erhöhungen, bereits einer dieser Temperaturen führen daher zu entsprechenden raschen Änderungen der Temperatur des Metallkörpers 66 und werden vom Thermoelement 68 erfaßt.

Je nach der Dicke des Zwischenstückes 74 (in Richtung der Flammrohrlängsachse 52), der Größe seiner Kontaktfläche mit dem Flammrohr 44 und seiner Höhe in radialer Richtung des Flammrohres läßt sich die Wärmezuführ zum Metallkörper 66 durch Wärmeleitung und Konvektion beeinflussen : ist der Metallkörper 66 in radialer Richtung weit in den Rückströmkanal 48 ragend angeordnet, so wird die Wärmeübertragung vom Rauchgas her durch Konvektion stark erhöht, wogegen infolge der großen radialen Höhe des Zwischenstückes 74 die Wärmezufuhr durch Wärmeleitung erschwert wird. Weist das Zwischenstück 74 in radialer Richtung des Flammrohres dagegen geringe Höhe auf, so daß der Metallkörper 66 gegenüber dem vorbeschriebenen Fall weniger in den Rückströmkanal 48 ragt, dann sind die Verhältnisse umgekehrt : Die Wärmeübertragung vom Rauchgas zum Metallkörper 66 ist geringer, die Wärmezufuhr durch Wärmeleitung ist erhöht. Es läßt sich daher durch entsprechende Ausbildung der Einfluß von Rauchgas- und Flammrohrtemperatur auf den Metallkörper auf den vorgegebenen Einzelfall abstimmen. Zweckmäßig ist die Höhe des Zwischenstückes an der geringsten Stelle ungefähr das 0,5 bis 2-fache der Wanddicke des Flammrohres 44.

Tritt nun während des Betriebs eine Verschmutzung der Außenseite des Heizmantels 33 auf, z.B. durch Abfallmaterial, so wird die Wärmeabgabe des Heizmantels verringert mit der Folge, daß bei unveränderter Brenngaszufuhr die Temperatur des Heizmantels 33 und somit auch die Temperaturen von Rauchgas und Flammrohr 44 auf unzulässige Werte ansteigen. Dieser Fall kann auch bei Betriebsstörungen des Mantelstrahlheizrohres und/oder des Wirbelbettes auftreten. Da ein solcher Anstieg zu Beschädigungen des Mantelstrahlheizrohres führt, ist es erforderlich, einen solchen Betriebszustand rasch zu erfassen. Hierzu dient das mit seinem meßaktiven Teil im Metallkörper 66 angeordnete Thermoelement. Aus den weiter oben genannten Gründen folgt die Temperatur des Metallkörpers 66 sehr rasch Temperaturänderungen von Flammrohr und Rauchgas, schädliche Betriebszustände, insbesondere ein Temperaturanstieg auf unzulässige Werte, des Mantelstrahlheizrohres und hauptsächlich des Heizmantels 33 werden daher durch das Thermoelement 68 sehr rasch erfaßt, so daß bei Temperaturantieg zweckmäßig ein Signal ausgelöst wird und/oder Regeleingriffe wie Drosselung oder Unterbrechung der Brenngaszufuhr selbsttätig ausgelöst werden.

Durch die erfindungsgemäße Ausrüstung wird daher auf einfache, kostengünstige Weise die Betriebssicherheit eines Mantelstrahlheizrohres beim Einsatz in Wirbelbettreaktoren erhöht.

## Patentansprüche

1. Wirbelbettreaktor für die pyrolytische Behandlung von Ausgangsmaterial, insbesondere Kohlenwasserstoffe enthaltendem Abfallmaterial, mit mindestens einem in den Pyrolyseraum (20) ragenden Mantelstrahlheizrohr (16), dessen Flammrohr (44) von einem Rauchgas-Rückströmkanal (48) umgeben ist, dadurch gekennzeichnet, daß mindestens ein Thermoelement (68) an seinem meßaktiven Ende an einem im Verhältnis zum Flammrohrdurchmesser kleinen Metallkörper (66) angeordnet ist, der im heißen Endbereich (58) des Flammrohres (44) auf dessen Außenseite wärmeleitend befestigt ist und in den Rückströmkanal (48) ragt.

2. Wirbelbettreaktor nach Anspruch 1, dadurch gekennzeichnet, daß zwischen den Metallkörper (66) und das Flammrohr (44) ein metallisches Zwischenstück (74) eingefügt ist, das an die Profile von Flammrohr (44) und Metallkörper (66) angepaßt ist.

3. Wirbelbettreaktor nach Anspruch 1 oder 2, dadurch gekennzeichnet, daß die Länge des Metallkörpers (66) das 5- bis 10-fache und die Breite und Dicke des Metallkörpers das 1,5- bis 4-fache der Wanddicke des Flammrohres (44) betragen.

4. Wirbelbettreaktor nach Anspruch 2 oder 3, dadurch gekennzeichnet, daß die tangentiale Länge des Zwischenstücks (74) das 1,5- bis 3-fache der Breite des Metallkörpers (66) in tangentialer Richtung beträgt und seine Dicke in Richtung der Flammrohrlängsachse kleiner ist als die Länge des Metallkörpers (66).

5. Wirbelbettreaktor nach mindestens einem der Ansprüche 1 bis 4, dadurch gekennzeichnet, daß der Metallkörper (66) ungefähr die Form eines Quaders aufweist, dessen Längsachse (72) ungefähr in Richtung der Flammrohrlängsachse (52) verläuft, und daß das meßaktive Ende des Thermoelements (68) in einem Längskanal (78) des Metallkörpers (66) angeordnet ist.

6. Wirbelbettreaktor nach Anspruch 5, dadurch gekennzeichnet, daß der Längskanal (78) an dem Ende, das dem Kopf (38) des Mantelstrahlheizrohres abgewandt ist, durch einen Boden (84) verschlossen ist, und daß die Verbindungsstelle (Schweißperle 86) der Thermodrähte (80) des Thermoelementes in einer Längsbohrung (88) des Bodens (84) eingeschweißt ist.

7. Wirbelbettreaktor nach mindestens einem der Ansprüche 1 bis 6, dadurch gekennzeichnet, daß mehrere Thermoelemente im heißesten Bereich des Flammrohres insbesondere am Umfang verteilt angeordnet sind.

8. Wirbelbettreaktor nach mindestens einem der Ansprüche 1 bis 7, dadurch gekennzeichnet, daß das Thermoelement (68) mäander- oder wellenförmig vom Metallkörper (66) zum kälteren Ende des Flammröhres (44) geführt ist und am Kopf (38) des Mantelstrahlheizrohres unter Abdichtung in den Außenraum übertritt.

## Claims

1. Fluidised-bed reactor for pyrolytic treatment of a starting material, in particular waste material containing hydrocarbons, having at least one jacketed radiant heater tube (16) which protrudes into the pyrolysis chamber (20) and the flame tube (44) of which is surrounded by a flue gas return flow channel (48), characterised in that the measurement-active end of at least one thermocouple (68) is arranged on a metal body (66) which is small compared with the diameter of the flame tube and which is fixed for thermal conduction to the outside of the hot end region (58) of the flame tube (44) and protrudes into the return flow channel (48).

2. Fluidised-bed reactor according to Claim 1, characterised in that a metallic spacer (74), which is adapted to the profiles of the flame tube (44) and of the metal body (66), is inserted between the metal body (66) and the flame tube (44).

3. Fluidised-bed reactor according to Claim 1 or 2, characterised in that the length of the metal body (66) is 5 to 10 times and the width and thickness of the metal body are 1.5 to 4 times the wall thickness of the flame tube (44).

4. Fluidised-bed reactor according to Claim 2 or 3, characterised in that the tangential length of the spacer (74) is 1.5 to 3 times the width of the metal body (66) in the tangential direction and its thickness in the direction of the longitudinal axis of the flame tube is smaller than the length of the metal body (66).

5. Fluidised-bed reactor according to at least one of Claims 1 to 4, characterised in that the metal body (66) has approximately the shape of an oblong cuboid, the longitudinal axis (72) of which runs approximately in the direction of the longitudinal axis (52) of the flame tube, and that the measurement-active end of the thermocouple (68) is arranged in a longitudinal channel (78) of the metal body (66).

6. Fluidised-bed reactor according to Claim 5, characterised in that the longitudinal channel (78) is closed by a bottom (84) at the end facing away from the head (38) [sic] of the jacketed radiant heater tube, and that the junction (weld bead 86) of the thermowires (80) of the thermocouple is welded into a longitudinal bore (88) of the bottom (84).

7. Fluidised-bed reactor according to at least one of Claims 1 to 6, characterised in that a plurality of thermocouples are arranged in the hottest region of the flame tube, especially distributed around the periphery.

8. Fluidised-bed reactor according to at least one of Claims 1 to 7, characterised in that the thermocouple (68) is taken in a meandering or wavy run from the metal body (66) to the colder end of the flame tube (44) and passes, with a seal, at the head (38) [sic] of the jacketed radiant heater tube into the exterior space.

## Revendications

1. Réacteur à lit fluidisé pour le traitement pyrolytique d'une matière de départ, en particulier d'une matière de déchet contenant des hydrocarbures, comprenant au moins un tube de chauffage par irradiation à chemise (16) qui fait saillie dans la chambre de pyrolyse (20) et dont le tube à flamme (44) est entouré par un canal de reflux du gaz de fumée (48), caractérisé en ce qu'au moins un thermoélément (68) est, à son extrémité active du point de vue de la mesure, agencé sur un corps métallique (66) qui est petit par rapport au diamètre du tube à flamme, est fixé de manière thermoconductrice sur le côté externe de la zone d'extrémité très chaude (58) du tube à flamme (44) et fait saillie dans le canal de reflux (48).

2. Réacteur à lit fluidisé suivant la revendication 1, caractérisé en ce qu'une pièce intermédiaire métallique (74), qui est adaptée aux profils du tube à flamme (44) et du corps métallique (66), est insérée entre le corps

6

métallique (66) et le tube à flamme (44).

3. Réacteur à lit fluidisé suivant l'une des revendications 1 et 2, caractérisé en ce que la longueur du corps métallique (66) est de 5 à 10 fois l'épaisseur de paroi du tube à flamme (44) et en ce que la largeur et épaisseur du corps métallique est de 1,5 à 4 fois l'épaisseur de paroi du tube à flamme (44).

4. Réacteur à lit fluidisé suivant l'une des revendications 2 et 3, caractérisé en ce que la longueur tangentielle de la pièce intermédiaire (74) est de 1,5 à 3 fois la largeur du corps métallique (66) suivant la direction tangentielle et en ce que son épaisseur suivant la direction de l'axe longitudinal du tube à flamme est plus petite que la longueur du corps métallique (66).

5. Réacteur à lit fluidisé suivant au moins l'une des revendications 1 à 4, caractérisé en ce que le corps métallique (66) présente approximativement la forme d'un parallélépipède dont l'axe longitudinal (72) s'étend approximativement suivant la direction de l'axe longitudinal (52) du tube à flamme et en ce que l'extrémité active du point de vue de la mesure du thermoélément (68) est agencée dans un canal longitudinal (78) du corps métallique (66).

6. Réacteur à lit fluidisé suivant la revendication 5, caractérisé en ce que le canal longitudinal (78) est fermé par un fond (84) à l'extrémité qui est située à l'opposé de la tête (18) du tube de chauffage par irradiation à chemise et en ce que l'emplacement de liaison (perle de soudure 86) entre les fils (80) du thermoélément est soudé dans un alésage longitudinal (88) du fond (84).

7. Réacteur à lit fluidisé suivant au moins l'une des revendications 1 à 6, caractérisé en ce que plusieurs thermoéléments sont, dans la zone la plus chaude du tube à flamme, agencés de manière répartie en particulier sur le pourtour.

8. Réacteur à lit fluidisé suivant au moins l'une des revendications 1 à 7, caractérisé en ce que le thermoélément (68) est guidé sous la forme d'un méandre ou d'une onde depuis le corps métallique (66) vers l'extrémité plus froide du tube à flamme (44) et en ce qu'il passe dans l'espace extérieur, avec étanchéification, à la tête (18) du tube de chauffage par irradiation à chemise.

Fig. 1

Fig. 2

Fig. 3

Fig. 4

Fig. 6

Fig. 5